# FASCICULE DE BREVET EUROPEEN

(11) **EP 2 626 537 B1**
(45) Date de publication et mention de la délivrance du brevet: **08.06.2016**
(21) Numéro de dépôt: 12008244.1
(22) Date de dépôt: 11.12.2012
(51) Int. Cl.: F02C 9/28, B64D 31/00

(54) **Procédé automatique de régulation d'un groupe de motorisation d'aéronef à voilure tournante, dispositif et aéronef**
Automatisches Einstellverfahren der Motorenanlage eines Drehflügelflugzeugs, Vorrichtung und Drehflügelflugzeug
Automatic method for controlling a rotorcraft engine group, device and rotorcraft

(30) Priorité: 07.02.2012 FR 1200354
(43) Date de publication de la demande: 14.08.2013
(73) Titulaire: Airbus Helicopters, 13725 Marignane Cedex (FR)
(72) Inventeur: Corpron, Alban, F-13300 Salon DE Provence (FR)
(74) Mandataire: GPI & Associés

(56) Documents cités:
- US-A- 5 403 155
- US-A1- 2004 088 085
- US-A1- 2011 208 400
- US-B1- 6 880 784

## Description

La présente invention concerne un procédé automatique de régulation d'un groupe de motorisation d'aéronef, un dispositif et un aéronef.

Plus particulièrement, l'invention s'applique à un aéronef à voilure tournante.

Classiquement, un aéronef à voilure tournante est équipé d'un groupe de motorisation comprenant au moins un moteur thermique, tel qu'un moteur thermique de type moteur à pistons ou à turbines. Un tel moteur à turbines est plus généralement dénommé « turbomoteur ».

Une boîte de réduction de vitesse lie le groupe de motorisation au rotor principal d'avancement et de sustentation: il s'agit de la boîte de transmission principale de puissance.

Les limitations thermiques d'un moteur thermique, et les limitations en couple d'une boîte de transmission principale, permettent de définir une enveloppe de fonctionnement de chaque moteur thermique englobant deux régimes de vol normaux d'utilisation:
- le régime de décollage correspondant à un niveau de couple pour la boîte de transmission principale et un échauffement du moteur thermique admissibles pendant un temps limité sans dégradation notable, ce régime de décollage étant défini par une puissance maximale au décollage PMD et une durée d'utilisation de cette puissance maximale au décollage généralement de l'ordre de cinq minutes,
- le régime maximal continu, ce régime maximal continu étant défini par une puissance maximale en continu PMC correspondant environ à 90% de la puissance maximale au décollage PMD et par une durée d'utilisation de cette puissance maximale en continu généralement illimitée.

De plus, un constructeur définit un régime de ralenti minimisant la consommation en carburant, l'autonomie du moteur thermique étant néanmoins conservée durant ce régime de fonctionnement.

Le régime de ralenti d'un moteur d'aéronef est un mode de fonctionnement particulier permettant de faire fonctionner le ou les moteurs de l'aéronef au sol en minimisant les nuisances et/ou maximisant le confort des personnes et équipages évoluant aux alentours de l'aéronef. En particulier, le régime de ralenti vise à :
- maintenir le moteur en température pour un départ rapide,
- minimiser le bruit émis par l'aéronef,
- minimiser les émissions de polluants et la consommation de carburant,
- permettre la génération électrique de bord et un prélèvement d'air chaud pour assurer le chauffage et le désembuage de la cabine

Le régime de ralenti est donc un mode relativement complexe, dont les objectifs peuvent être antagonistes et contraints. Par exemple, le rotor de sustentation d'un hélicoptère doit être entraîné par un turbomoteur fonctionnant à un régime de ralenti relativement bas pour minimiser les nuisances sonores, ce turbomoteur devant avoir un régime de ralenti relativement élevé pour assurer le fonctionnement d'un générateur électrique.

Les régimes permettant de faire fonctionner l'aéronef en vol sont dénommés « régime de vol » par commodité, alors que le régime permettant de faire fonctionner le turbomoteur au ralenti au sol est dénommé « régime de ralenti ».

L'aéronef est alors pourvu d'un sélecteur physique d'état à trois positions stables. Ces trois positions du sélecteur d'état sont:
Motorisation arrêtée dit « STOP » ; Motorisation en mode ralenti dit « IDLE » ; et Motorisation en mode vol dit « FLIGHT ».

Ce sélecteur manuel d'état (STOP/IDLE/FLY) permet ainsi d'indiquer à un calculateur moteur embarqué dans l'aéronef :
- d'arrêter chaque turbomoteur dans la position « STOP » du sélecteur,
- de mettre en oeuvre le régime de ralenti dans la position « IDLE » du sélecteur,
- de mettre en oeuvre un régime de vol dans la position « FLIGHT » du sélecteur.

Par suite, lorsque le pilote positionne le sélecteur sur la position « IDLE », le calculateur moteur d'un turbomoteur régule ce turbomoteur pour le faire fonctionner conformément au régime de ralenti défini par le constructeur.

Selon une première réalisation, un calculateur moteur régule une première vitesse de rotation Ng qui est la vitesse de rotation du générateur de gaz du turbomoteur.

Ainsi, un calculateur moteur agit notamment sur un doseur de carburant du turbomoteur pour faire tendre la première vitesse de rotation Ng vers une vitesse de rotation de consigne Ng*.

Cette première réalisation présente l'avantage d'assurer une vitesse de rotation du générateur de gaz de consigne permettant un prélèvement de puissance mécanique minimal et un prélèvement d'air chaud minimal.

Un tel prélèvement d'air chaud minimal peut être déterminé pour assurer le chauffage et / ou le désembuage d'une cabine de l'aéronef.

Par ailleurs, cette première réalisation empêche tout décollage, intempestif de l'aéronef lorsque le mode de ralenti est enclenché. En effet, si un pilote augmente un pas collectif des pales de la voilure tournante, alors la puissance délivrée par le turbomoteur n'augmente pas. Au contraire, la vitesse de rotation de la turbine libre et la vitesse de rotation du rotor diminuent.

La deuxième vitesse de rotation NTL qui est la vitesse de rotation de la turbine libre et la vitesse de rotation de la voilure tournante variant, le bruit généré par l'aéronef n'est pas contrôlé. De plus, la voilure tournante risque de se trouver dans une plage de fonctionnement susceptible d'induire un phénomène de résonance sol.

A titre de variante, selon une deuxième réalisation, un calculateur moteur régule la deuxième vitesse de rotation NTL d'une turbine libre du turbomoteur.

Ainsi, un calculateur moteur agit notamment sur un doseur de carburant du turbomoteur pour faire tendre la deuxième vitesse de rotation NTL vers une vitesse de rotation de consigne NTL*.

Cette deuxième réalisation a l'avantage d'assurer une vitesse de rotation du rotor de l'hélicoptère constante. Les inconvénients précités sont alors évités.

En revanche, la première vitesse de rotation Ng peut varier sans que celle-ci ne soit contrôlée par le système de régulation. Dès lors, la première vitesse de rotation Ng peut devenir insuffisante pour permettre un prélèvement de puissance mécanique minimal et un prélèvement d'air chaud minimal.

Enfin, la consigne utilisée de la deuxième vitesse de rotation est généralement inférieure à la vitesse nominale de la voilure tournante en vol.

Si un pilote modifie accidentellement le pas collectif des pales de la voilure tournante, la première vitesse de rotation Ng augmente. La puissance développée par le turbomoteur augmente en conséquence. L'aéronef risque alors de décoller avec une deuxième vitesse de rotation potentiellement trop basse.

Par suite, cet état de la technique impose à un pilote de déterminer volontairement s'il souhaite mettre en oeuvre un régime de ralenti au travers d'un mode ralenti ou un régime de vol au travers d'un mode de vol. En fonction des aéronefs, le régime de ralenti est de plus mis en oeuvre au travers d'une régulation de la vitesse de rotation du générateur de gaz des turbomoteurs ou au travers d'une régulation de la vitesse de rotation de la turbine libre des turbomoteurs.

En outre, si une légère augmentation de puissance est nécessaire pour un besoin secondaire (chauffage plus important, augmentation d'un besoin en énergie électrique, ...) le pilote est obligé de basculer la régulation du turbomoteur en mode de fonctionnement de vol

Dans le secteur aéronautique, des documents évoquent le contrôle et la commande automatisés de fonctionnement d'un ralenti d'un groupe de motorisation.

Ainsi, le document US20110208400 décrit l'utilisation d'un sélecteur comprenant une position ralenti dite « IDLE » et une position de vol dite « MAXPOWER » dans le cadre d'une commande électronique pour ajuster le fonctionnement d'un turbopropulseur d'avion. Une interface homme-machine permet donc au pilote de choisir un mode de fonctionnement du turbopropulseur, entre un mode de fonctionnement de fourniture libre de puissance et un mode de fonctionnement de ralenti

Une information issue d'un capteur de posé au sol et dite information « WoW » (pour l'anglais « Weight On Wheels ») est prise en compte pour définir un régime de ralenti.

Le document US4500966 décrit une commande d'urgence dite à « super urgence », pour un hélicoptère dont le rotor principal serait en sous vitesse de rotation suite à une panne de moteur.

Le document WO2000039442 décrit également un système de régulation de moteur d'avion ou d'hélicoptère.

L'arrière plan technologique inclut aussi les documents US 5 403 155, US 6 880 784, et US 2004/088085.

L'invention a alors pour objet un procédé automatique de régulation d'un groupe de motorisation d'aéronef selon la revendication 1 visant à alléger la charge de travail d'un pilote.

Selon l'invention, on met en oeuvre un procédé automatique de régulation d'un groupe de motorisation d'aéronef comprenant au moins un turbomoteur, cet aéronef comportant au moins une voilure tournante pourvue d'une pluralité de pales à pas variable entraînées en rotation par ledit groupe de motorisation, chaque turbomoteur pouvant fonctionner selon un mode de fonctionnement au ralenti et selon un mode de fonctionnement de vol.

Dès lors, durant une phase de sélection, on manoeuvre un sélecteur à deux positions pour soit arrêter chaque turbomoteur soit mettre en fonctionnement chaque turbomoteur.

De plus, durant une phase de régulation, chaque turbomoteur est commandé automatiquement pour mettre en oeuvre le mode de fonctionnement au ralenti si un pas collectif des pales est inférieur à un seuil et si l'aéronef repose sur un sol.

Le mode de fonctionnement au ralenti peut être du type associé à la position « IDLE » des sélecteurs connus, le mode de fonctionnement de vol pouvant être du type associé à la position « FLIGHT » des sélecteurs connus.

On comprend donc que le mode de fonctionnement au ralenti permet le fonctionnement d'un turbomoteur selon au moins un régime de ralenti. Le mode de fonctionnement de vol permet le fonctionnement du turbomoteur selon au moins un régime de vol tel que le régime de décollage ou le régime maximal continu par exemple.

Par conséquent, contrairement à l'état de la technique on ne met pas en oeuvre un sélecteur à trois positions mais un sélecteur à deux positions.

Au lieu de choisir un mode de fonctionnement au ralenti ou un mode de fonctionnement de vol, le pilote se contente de requérir le fonctionnement du groupe de motorisation.

Toutefois, l'invention ne requiert pas la suppression du mode de fonctionnement au ralenti. Par contre, durant la phase de régulation on détermine de manière automatique s'il convient de mettre en oeuvre le mode de fonctionnement au ralenti ou le mode de fonctionnement de vol. La sélection du mode de fonctionnement adéquat est donc automatisée.

Le choix du mode de fonctionnement dépend alors de deux critères.

Un première critère est relatif à l'état de posé de l'aéronef sur le sol.

Si l'aéronef est posé sur un sol, chaque turbomoteur peut fonctionner selon le mode de fonctionnement au ralenti. Cependant, si le décollage est imminent, il convient de mettre en oeuvre un régime de vol du mode de fonctionnement de vol pour assurer la sécurité de l'opération.

Or, pour décoller, un pilote doit augmenter le pas collectif des pales de la voilure tournante. Ce pas collectif est donc un indicateur fiable de la situation. Un deuxième critère vise alors à déterminer si le pas collectif est inférieur à un seuil.

Par conséquent, lorsque l'aéronef est à l'arrêt, le sélecteur requiert l'arrêt du groupe de motorisation au travers de sa première position.

En manoeuvrant le sélecteur, le pilote requiert la mise en route du groupe de motorisation.

A ce stade, l'aéronef est posé sur le sol et le pas collectif est inférieur au seuil défini par le constructeur. Chaque turbomoteur fonctionne alors selon un régime de ralenti du mode de fonctionnement au ralenti.

Lorsque le pilote débute la manoeuvre de décollage, il augmente le pas collectif, ce qui a pour effet de créer une augmentation de portance. Au début de cette manoeuvre de décollage, le pas collectif n'est pas suffisant pour créer une portance permettant le décollage.

Par contre, dès que le pas collectif atteint le seuil fixé par le constructeur, ce seuil étant inférieur au pas collectif induisant le décollage, chaque turbomoteur met alors en oeuvre un régime de vol du mode de fonctionnement de vol avant le début en tant que tel du décollage.

Le mode de fonctionnement au ralenti est alors désactivé non pas sur la base d'une information relative à l'état de posé, mais sur une détection de manoeuvre de pas collectif.

A l'inverse, lorsque l'aéronef est en vol, chaque turbomoteur met de fait en oeuvre un régime de vol du mode de fonctionnement de vol.

Lorsque l'aéronef se pose sur le sol, le pas collectif peut être supérieur au seuil. Lorsque le pas collectif est réduit en-dessous du seuil et que l'information « aéronef posé au sol » est établie, chaque turbomoteur met en oeuvre un régime de ralenti du mode de fonctionnement au ralenti.

L'invention permet donc de simplifier le travail d'un pilote en déclenchant automatiquement le fonctionnement d'un groupe de motorisation à un régime de ralenti, à savoir sans intervention du pilote sur un sélecteur dédié au régime de ralenti.

Ce procédé peut de plus comporter une ou plusieurs des caractéristiques additionnelles qui suivent.

Par exemple, durant une phase de régulation, chaque turbomoteur est commandé automatiquement pour mettre en oeuvre le mode de fonctionnement au ralenti si le pas collectif des pales de la voilure tournante est inférieur au seuil, et si l'aéronef repose sur un sol depuis une durée de temporisation.

Il est courant de faire des exercices visant à se poser très brièvement sur le sol pour simuler une évacuation rapide ou un remplissage rapide de l'aéronef par exemple. La mise en place d'une durée de temporisation permet de prendre en considération de tels essais sans mettre au ralenti des turbomoteurs.

Selon un autre aspect, chaque turbomoteur comportant un générateur de gaz et une turbine libre, durant la phase de régulation on peut mettre en oeuvre automatiquement le mode de fonctionnement au ralenti en fonction de conditions opérationnelles et hiérarchisées:
- soit au travers d'un premier mode de régulation en régulant une première vitesse de rotation qui est la vitesse de rotation dudit générateur de gaz,
- soit au travers d'un deuxième mode de régulation en régulant une deuxième vitesse de rotation qui est la vitesse de rotation de ladite turbine libre.

En effet, il est possible de réguler un turbomoteur durant le mode de fonctionnement au ralenti pour faire tendre vers une consigne soit la première vitesse de rotation dudit générateur de gaz, soit la deuxième vitesse de rotation de la turbine libre.

Selon le premier mode de régulation, on augmente ou on réduit le débit de carburant fourni au turbomoteur pour que la première vitesse de rotation tende vers une consigne.

A l'inverse, selon le deuxième mode de régulation, on augmente ou on réduit le débit de carburant fourni au turbomoteur pour que la deuxième vitesse de rotation tende vers une consigne.

Selon l'invention, les deux modes de régulation sont implémentés pour chaque turbomoteur, contrairement à l'état de la technique qui prévoit l'implémentation de l'un des deux modes de régulation seulement.

On choisit alors automatiquement le mode de régulation à appliquer durant le mode de fonctionnement au ralenti en fonction de conditions opérationnelles et hiérarchisées définies par le constructeur.

Il est possible d'adapter le mode de fonctionnement au ralenti aux différentes conditions extérieures sans avoir besoin de basculer sur un mode de fonctionnement vol. Par exemple une augmentation de la température de l'habitacle se fera sans passer au mode de fonctionnement vol.

Par exemple, ces conditions opérationnelles et hiérarchisées sont :
- la génération d'air chaud à partir du turbomoteur pour chauffer l'aéronef en fonction de conditions extérieures,
- la génération d'énergie électrique à partir du générateur de gaz pour alimenter électriquement l'aéronef,
- la minimisation d'émissions sonores,
- la minimisation de la consommation de carburant.

On peut donc privilégier automatiquement en premier lieu la génération d'air chaud, puis la génération d'énergie électrique à partir du générateur de gaz, le bruit généré et la consommation de carburant.

Il est à noter qu'on peut modifier un ordre des priorités en fonction des besoins de l'opérateur de l'aéronef.

Selon une variante préférée, durant la phase de régulation, on détermine une première vitesse de rotation originelle à atteindre pour réguler la deuxième vitesse de rotation à un niveau défini par le constructeur.

Ce niveau peut être défini pour assurer un fonctionnement de l'aéronef hors d'une plage de résonance sol du giravion.

Autrement dit, le constructeur définit une deuxième vitesse de rotation critique minimisant les risques d'apparition d'un phénomène de résonance sol.

De plus, ce niveau peut être associé à au moins une des conditions opérationnelles et hiérarchisées les moins importantes. Selon l'exemple précédent, ce niveau peut être établi pour minimiser le bruit émis et la consommation en carburant.

En fonction des conditions extérieures, on en déduit automatiquement la première vitesse de rotation originelle.

Dès lors, on détermine une énergie électrique cible que doit fournir le groupe de motorisation à l'aéronef. Par exemple, on détermine l'intensité électrique consommée par l'aéronef.

Chaque turbomoteur doit alors fournir une énergie cible égale à cette intensité électrique consommée divisée par le nombre de turbomoteur par exemple.

Si le groupe de motorisation ne peut pas fournir cette énergie électrique cible lorsque chaque générateur de gaz fonctionne à la première vitesse de rotation originelle, on met en oeuvre le mode de fonctionnement au ralenti en régulant la première vitesse de rotation du générateur de gaz.

En effet, l'augmentation du prélèvement mécanique permettant la génération d'énergie électrique tend à ralentir la première vitesse de rotation du générateur de gaz du turbomoteur. Une baisse trop importante conduit à l'extinction du turbomoteur.

Le constructeur privilégie donc une régulation de la première vitesse de rotation du générateur de gaz pour éviter une extinction de ce turbomoteur.

Plus précisément, si le groupe de motorisation ne peut pas fournir ladite énergie électrique cible lorsque chaque générateur de gaz fonctionne à ladite première vitesse de rotation originelle :
- on détermine une température d'air chaud de consigne à fournir pour chauffer l'aéronef,
- on détermine une première vitesse de rotation de consigne permettant de fournir ladite énergie électrique cible,
- on détermine si la première vitesse de rotation de consigne permet d'atteindre la température d'air chaud de consigne,
- si la première vitesse de rotation de consigne permet d'atteindre la température d'air chaud de consigne, on contrôle le turbomoteur afin de maintenir la première vitesse de rotation égale à la première vitesse de rotation de consigne,
- si la première vitesse de rotation de consigne ne permet pas d'atteindre la température d'air chaud de consigne, on contrôle le turbomoteur afin de maintenir la première vitesse de rotation égale à une première vitesse de rotation cible permettant d'atteindre ladite température d'air chaud de consigne.

Par contre, si le groupe de motorisation peut fournir ladite énergie électrique cible lorsque chaque générateur de gaz fonctionne à ladite première vitesse de rotation originelle :
- on détermine une température d'air chaud de consigne à fournir pour chauffer l'aéronef,
- si la première vitesse de rotation originelle permet d'atteindre ladite température d'air chaud de consigne, on contrôle la première vitesse de rotation afin de maintenir la deuxième vitesse de rotation égale audit niveau,
- si la première vitesse de rotation originelle ne permet pas d'atteindre ladite température d'air chaud de consigne, on détermine la première vitesse de rotation de consigne permettant d'atteindre ladite température d'air chaud de consigne, puis on contrôle le turbomoteur afin de maintenir la première vitesse de rotation égale à la première vitesse de rotation de consigne.

Selon un autre aspect, on peut mettre en oeuvre un moyen d'inhibition du premier mode de régulation.

Au cas où l'opérateur de l'aéronef souhaiterait minimiser le bruit et/ou la consommation de l'aéronef au détriment de la charge des batteries de bord ou de la température intérieure, une sélection manuelle forcée du deuxième mode de régulation peut donc être implémentée.

Par ailleurs, on peut implémenter une butée pour limiter un couple développé par un arbre de sortie du turbomoteur lorsque le turbomoteur fonctionne selon le mode de fonctionnement au ralenti.

La butée interdit à chaque turbomoteur de fournir un couple supérieur ou égal au couple nécessaire pour décoller à la masse minimale de l'appareil.

Ainsi, le deuxième mode de régulation ne risque pas d'induire un décollage accidentel.

Deux approches sont alors envisageables :
- soit la limite de couple est implémentée de manière conservative pour empêcher le décollage dans les conditions les plus favorables à ce dernier (air très dense, à basse altitude et basse température),
- soit la limite de couple est calculée d'après les informations de pression et de température extérieures.

Cette deuxième approche peut être nécessaire au cas où le couple nécessaire au décollage dans des conditions favorables (temps froid, basse altitude) est inférieur au couple nécessaire au maintien d'un régime de ralenti dans des conditions défavorables (temps chaud, haute altitude).

La butée peut être du type implémentée pour les régimes de fonctionnement de vol. Dès lors la butée peut être mise en oeuvre soit par voie logicielle, soit par voie analogique, soit par voie hydromécanique.

S'il est courant d'implémenter une butée en couple lors de la mise en oeuvre d'un régime de vol susceptible d'engendrer un couple important, la mise en oeuvre d'une telle butée dans le cadre d'un régime de ralenti d'un mode de fonctionnement au ralenti parait surprenante.

Il est à noter que cette butée peut être implémentée sur un aéronef muni d'un sélecteur à comprenant une position « IDLE » et une position « FLIGHT » si la position « IDLE » induit une régulation de la deuxième vitesse de rotation de la turbine libre.

Outre un procédé, l'invention vise un dispositif de régulation selon la revendication 12 mettant en oeuvre ce procédé pour réguler un groupe de motorisation d'aéronef comprenant au moins un turbomoteur, cet aéronef comportant au moins une voilure tournante pourvue d'une pluralité de pales à pas variable entraînées en rotation par le groupe de motorisation, chaque turbomoteur pouvant fonctionner selon un mode de fonctionnement au ralenti et selon au moins un mode de fonctionnement de vol.

Ce dispositif de régulation comporte :
- un système de détermination d'un pas collectif des pales,
- un dispositif de détermination d'un état de posé de l'aéronef sur un sol,
- un sélecteur à deux positions, le sélecteur ayant une première position requérant l'arrêt de chaque turbomoteur et une deuxième position requérant le fonctionnement de chaque turbomoteur,
- un système de calcul relié au système de détermination du pas collectif ainsi qu'au dispositif de détermination de l'état de posé et au sélecteur pour commander chaque turbomoteur, le système de calcul exécutant des instructions mémorisées pour automatiquement mettre en oeuvre le mode de fonctionnement au ralenti sur chaque turbomoteur si un pas collectif desdites pales est inférieur à un seuil et si l'aéronef repose sur un sol.

Ce dispositif peut de plus comporter une ou plusieurs des caractéristiques qui suivant.

Par exemple, le système de calcul peut comporter un calculateur avionique relié au système de détermination ainsi qu'au dispositif de détermination et au sélecteur, ce système de calcul incluant un calculateur moteur par turbomoteur relié au calculateur avionique.

En outre, l'aéronef comportant un réseau électrique alimenté électriquement par le groupe de motorisation, le dispositif de régulation comprend éventuellement un système de mesure de l'énergie électrique consommée par ce réseau électrique.

Par ailleurs, le dispositif de régulation peut comprendre un dispositif de mesure des conditions environnementales extérieures à l'aéronef afin de déterminer une température d'air chaud de consigne pour chauffer l'aéronef.

En outre, on peut mettre en oeuvre un moyen d'inhibition d'un premier mode de régulation d'un mode de fonctionnement au ralenti.

Enfin, l'invention vise un aéronef selon la revendication 16 muni d'un groupe de motorisation comprenant au moins un turbomoteur, cet aéronef comportant au moins une voilure tournante pourvue d'une pluralité de pales à pas variable entraînées en rotation par le groupe de motorisation, chaque turbomoteur pouvant fonctionner selon un mode de fonctionnement au ralenti et selon au moins un mode de fonctionnement de vol.

Cet aéronef comporte alors un dispositif de régulation du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef selon l'invention, et,
- la figure 2, un schéma explicitant le procédé selon l'invention.

Les éléments présents dans plusieurs figures distinctes sont affectés d'une seule et même référence.

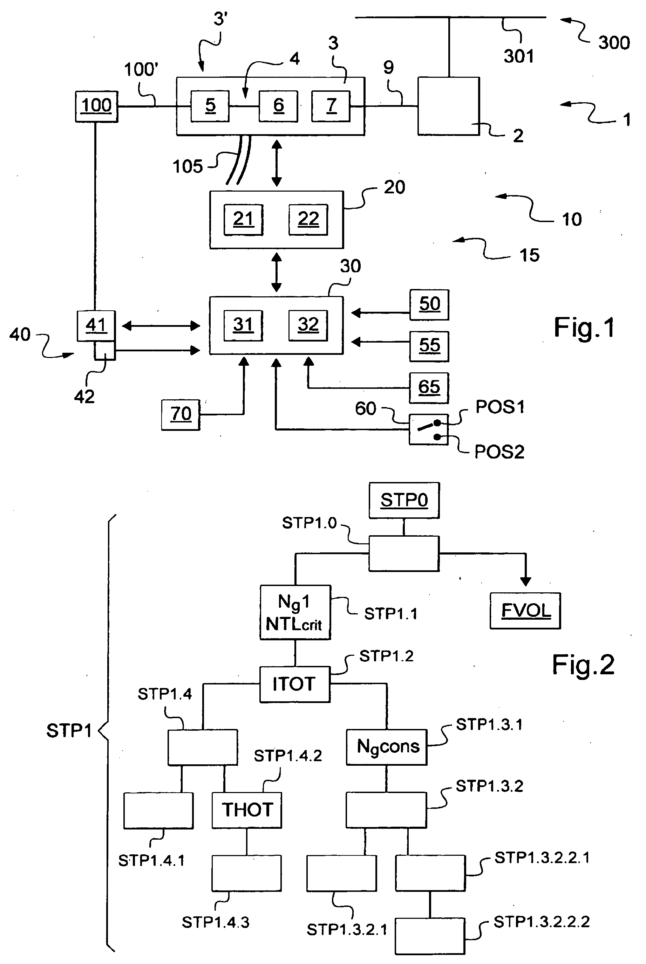

La figure 1 présente un aéronef 1 muni d'une voilure tournante 300.

L'aéronef 1 comporte un groupe de motorisation 3'. Ce groupe de motorisation 3' inclut au moins un turbomoteur 3 pour entraîner la voilure tournante 300 au travers d'une boîte de transmission de puissance principale 2.

Chaque turbomoteur comporte un générateur de gaz 4 et une turbine libre 7. Par exemple, le générateur de gaz comporte un compresseur 5 coopérant avec une turbine haute pression 6 qui est agencée en amont de la turbine libre 7.

La turbine libre 7 est alors liée à la boîte de transmission de puissance principale 2 par une chaîne cinématique 9. Cette chaîne cinématique 9 est munie par exemple d'un arbre de sortie mis en rotation par la turbine libre.

Par ailleurs, l'aéronef comprend un moyen de prélèvement mécanique 100 d'énergie.

Ce moyen de prélèvement mécanique 100 peut être un équipement électrique de type générateur électrique. Le moyen de prélèvement mécanique 100 est alors entraîné en rotation par le générateur de gaz 4 via un arbre 100'.

Le moyen de prélèvement mécanique 100 peut aussi fonctionner dans un mode moteur pour remplir une fonction de démarreur.

Dès lors, le moyen de prélèvement mécanique 100 communique électriquement avec un réseau électrique 40 de l'aéronef, et par exemple avec un « coeur électrique » 41.

En outre, l'aéronef comporte un moyen de prélèvement d'air 105 pour prélever de l'air chaud sur chaque turbomoteur.

Par ailleurs, l'aéronef 1 comporte un dispositif de régulation 10 visant à minimiser la charge de travail d'un pilote en mettant en oeuvre le procédé explicité sur la figure 2.

Ainsi, durant une phase de sélection STP0 le pilote manoeuvre un sélecteur à deux positions pour soit arrêter chaque turbomoteur soit mettre en fonctionnement chaque turbomoteur 3.

En référence à la figure 1, le dispositif de régulation 10 comporte alors un sélecteur 60 ayant une première position POS1 requérant l'arrêt de chaque turbomoteur 3 et une deuxième position POS2 requérant le fonctionnement de chaque turbomoteur 3.

A cet effet, le dispositif de régulation 10 est muni d'un système de calcul 15 relié au sélecteur 60 pour commander chaque turbomoteur 3.

Ce système de calcul comporte au moins un organe de calcul exécutant des instructions mémorisées de manière non volatile sur un support de stockage pour arrêter ou faire fonctionner les turbomoteurs.

En référence à la figure 2, durant une phase de régulation STP1, chaque turbomoteur 3 est commandé automatiquement pour mettre en oeuvre le mode de fonctionnement au ralenti des turbomoteurs 3 si un pas collectif CLP des pales 301 de la voilure tournante est inférieur à un seuil et si l'aéronef 1 repose sur un sol.

Au cours d'une étape de choix STP1.0, on vérifie donc si les deux critères suivants sont remplis :
- le pas collectif CLP des pales 301 est inférieur à un seuil,
- l'aéronef 1 repose sur un sol.

Le critère relatif à l'état de posé de l'aéronef sur un sol peut de plus être associé à une durée de temporisation.

Si un des deux critères n'est pas rempli, le système de calcul 15 requiert la mise en oeuvre d'un mode de fonctionnement de vol.

A l'inverse, si ces deux critères sont remplis, le système de calcul 15 requiert automatiquement le fonctionnement des turbomoteurs 3 selon un mode de fonctionnement au ralenti.

En référence à la figure 1, le dispositif de régulation comporte alors un système de détermination 50 usuel d'un pas collectif des pales et un dispositif de détermination 55 usuel d'un état de posé de l'aéronef sur un sol.

On se référera à la littérature pour obtenir des informations relatives à un tel système de détermination 50 et à un tel dispositif de détermination 55.

Le système de calcul 15 est alors relié au système de détermination 50 ainsi qu'au dispositif de détermination 55 et au sélecteur 60, le système de calcul 15 exécutant des instructions mémorisées pour automatiquement mettre en oeuvre le mode de fonctionnement au ralenti sur chaque turbomoteur 3 si un pas collectif CLP des pales 301 est inférieur à un seuil et si l'aéronef 1 repose sur un sol.

Le système de calcul 15 peut comporter un calculateur moteur 20 par turbomoteur, tel qu'un calculateur moteur de type FADEC (« Full Authority Digital Engine Control » en langue anglaise).

Ce calculateur moteur 20 comporte alors une unité de calcul 21 et une mémoire 22 stockant des instructions exécutables par l'unité de calcul 21.

De plus, le système de calcul 15 peut être muni d'un calculateur avionique 30 muni d'un organe de calcul 31 et d'un moyen de stockage 32 mémorisant des instructions. Le calculateur avionique 30 est alors relié au système de détermination 50 ainsi qu'au dispositif de détermination 55 et au sélecteur 60.

Si les deux critères explicités sont remplis, le calculateur avionique 30 envoie alors une requête de fonctionnement selon un mode de fonctionnement au ralenti à chaque calculateur moteur 20. Chaque calculateur moteur régule alors le turbomoteur associé pour respecter cette requête.

De manière usuelle, le calculateur moteur contrôle la position d'un doseur carburant du turbomoteur pour commander le fonctionnement du turbomoteur 3.

Par ailleurs, chaque calculateur moteur peut réguler automatiquement le régime de ralenti du turbomoteur associé en fonction de conditions opérationnelles et hiérarchisées:
- soit au travers d'un premier mode de régulation en régulant une première vitesse de rotation Ng qui est la vitesse de rotation du générateur de gaz 4,
- soit au travers d'un deuxième mode de régulation en régulant une deuxième vitesse de rotation NTL qui est la vitesse de rotation de la turbine libre 7 du turbomoteur.

A cet effet, le calculateur peut prendre en considération la génération d'air chaud, puis la génération d'énergie électrique à partir d'un moyen de prélèvement mécanique, le bruit généré et la consommation de carburant.

En référence à la figure 2, durant une première étape d'optimisation STP 1.1 du mode de fonctionnement au ralenti, on détermine une première vitesse de rotation originelle Ng1 à atteindre pour réguler la deuxième vitesse de rotation à un niveau NTLcrit défini par le constructeur. Ce niveau NTLcrit est par exemple défini pour assurer un fonctionnement de l'aéronef 1 hors d'une plage de résonance sol, et/ ou remplir des conditions opérationnelles. A ce stade, ledit niveau peut être par exemple établi afin de minimiser le bruit généré et la consommation en carburant des turbomoteurs.

En référence à la figure 1, le dispositif de régulation peut inclure un dispositif de mesure 65 de conditions environnementales extérieures afin de déterminer l'altitude de l'aéronef et/ ou la pression extérieure, ainsi que la température extérieure.

Le calculateur avionique 30 peut alors transmettre les mesures effectuées à chaque calculateur moteur 20.

Chaque calculateur moteur 20 comprend alors dans une mémoire 22 au moins une loi donnant la première vitesse de rotation originelle Ng1 en fonction dudit niveau et desdites conditions environnementales. De telles lois sont établies par le constructeur par essais par exemple.

En utilisant les mesures réalisées, le calculateur avionique en déduit la première vitesse de rotation originelle Ng1.

De plus, l'aéronef 1 comportant un réseau électrique 40 alimenté électriquement par le groupe de motorisation 3', le dispositif de régulation 10 comprend un système de mesure 42 de l'énergie électrique consommée par le réseau électrique 40.

Durant une deuxième étape d'optimisation STP1.2 visant à prendre en considération une condition opérationnelle de type génération d'énergie électrique, le calculateur avionique 30 peut déterminer l'intensité électrique consommée par l'aéronef. Ce calculateur avionique 30 en déduit une énergie électrique cible ITOT que doit fournir chaque turbomoteur au travers du moyen de prélèvement mécanique associé. L'énergie électrique cible est éventuellement évaluée en intensité électrique cible à fournir.

Le calculateur avionique fournit cette énergie électrique cible ITOT à chaque calculateur moteur 20.

Le calculateur moteur 20 de chaque turbomoteur détermine à l'aide d'un modèle mathématique établi par le constructeur, par essais ou équivalent et mémorisé, si la première vitesse de rotation originelle Ng1 est suffisante pour permettre la création de l'énergie électrique cible.

Dans la négative, le mode de fonctionnement au ralenti doit être géré au travers de la régulation de la première vitesse de rotation Ng du générateur de gaz.

Dès lors, le calculateur moteur détermine durant une étape STP1.3.1 une première vitesse de rotation de consigne Ngcons permettant de fournir l'énergie électrique cible requise à l'aide du modèle mathématique mémorisé.

De plus, à l'aide de la température extérieure mesurée et grâce à un modèle thermique mémorisé établi par le constructeur, le calculateur moteur détermine durant une étape STP1.3.2 une température d'air chaud de consigne THOT à fournir pour chauffer l'aéronef visant à prendre en considération une condition opérationnelle de type génération d'air chaud. Le calculateur moteur en déduit si la première vitesse de rotation de consigne permet d'atteindre ladite température d'air chaud de consigne.

Durant une étape STP1.3.2.1, si la première vitesse de rotation de consigne permet d'atteindre cette température d'air chaud de consigne, le calculateur moteur contrôle le débit de carburant fourni au turbomoteur afin de maintenir la première vitesse de rotation égale à la première vitesse de rotation de consigne Ngcons.

Par contre, durant une étape STP1.3.2.2.1, si la première vitesse de rotation de consigne Ngcons ne permet pas d'atteindre ladite température d'air chaud de consigne THOT, le calculateur moteur détermine une première vitesse de rotation cible Ngcibl permettant d'atteindre ladite température d'air chaud de consigne.

Durant une étape STP1.3.2.2.2, le calculateur moteur contrôle le débit de carburant fourni au turbomoteur afin de maintenir la première vitesse de rotation Ng égale à la nouvelle première vitesse de rotation cible Ngcibl.

Par ailleurs, si la première vitesse de rotation originelle Ng1 d'un turbomoteur est suffisante pour permettre la création de l'énergie électrique cible, durant une étape d'optimisation STP1.4 le calculateur moteur détermine une température d'air chaud de consigne THOT à fournir pour chauffer l'aéronef, et si la première vitesse de rotation originelle Ng1 permet d'atteindre ladite température d'air chaud de consigne.

Durant une étape STP1.4.1, si la première vitesse de rotation originelle Ng1 permet d'atteindre la température d'air chaud de consigne THOT, le calculateur moteur 20 d'un turbomoteur contrôle le débit de carburant fourni au turbomoteur afin de maintenir la deuxième vitesse de rotation NTL du turbomoteur égale audit niveau NTLcrit.

Par contre, si la première vitesse de rotation originelle Ng1 ne permet pas d'atteindre ladite température d'air chaud de consigne THOT, durant une étape STP 1.4.2, le calculateur moteur de chaque turbomoteur détermine la première vitesse de rotation de consigne Ngcons permettant d'atteindre ladite température d'air chaud de consigne.

Durant une étape 1.4.3, le calculateur moteur contrôle le débit de carburant fourni au turbomoteur afin de maintenir la première vitesse de rotation Ng égale à la première vitesse de rotation de consigne Ngcons.

En référence à la figure 1, le dispositif de régulation peut par ailleurs comprendre un moyen d'inhibition 70 du premier mode de régulation.

De plus, chaque calculateur moteur peut être relié à un moyen de mesure du couple exercé sur l'arbre de sortie du turbomoteur associée.

Dès lors, chaque calculateur moteur comprend une butée, par exemple logiciel, pour limiter ce couple à un couple maximal défini par le constructeur. Ainsi, chaque calculateur moteur limite le débit de carburant fourni au turbomoteur pour respecter ladite butée.

Naturellement, la présente invention est sujette à de nombreuses variantes de mise en oeuvre. Bien que plusieurs modes de réalisation aient été décrits, il n'est pas concevable d'identifier de manière exhaustive toutes les variantes possibles. Il est bien sûr envisageable de remplacer un constituant décrit par un moyen équivalent sans sortir du cadre de la présente invention.

## Revendications

1. Procédé automatique de régulation d'un groupe de motorisation (3') d'aéronef (1) comprenant au moins un turbomoteur (3), cet aéronef (1) comportant au moins une voilure tournante (300) pourvue d'une pluralité de pales (301) à pas variable entraînées en rotation par ledit groupe de motorisation (3'), chaque turbomoteur (3) pouvant fonctionner selon un mode de fonctionnement au ralenti et selon un mode de fonctionnement de vol,
**caractérisé en ce que** :
- durant une phase de sélection (STP0), on manoeuvre un sélecteur (60) à deux positons pour soit arrêter chaque turbomoteur (3) soit mettre en fonctionnement chaque turbomoteur (3), et
- durant une phase de régulation (STP1), chaque turbomoteur (3) est commandé automatiquement pour mettre en oeuvre le mode de fonctionnement au ralenti si un pas collectif (CLP) desdites pales est inférieur à un seuil et si l'aéronef (1) repose sur un sol.

2. Procédé selon la revendication 1,
**caractérisé en ce que** durant une phase de régulation, chaque turbomoteur est commandé automatiquement pour mettre en oeuvre le mode de fonctionnement au ralenti si ledit pas collectif (CLP) est inférieur audit seuil et si l'aéronef (1) repose sur un sol depuis une durée de temporisation.

3. Procédé selon la revendication 1,
**caractérisé en ce que** chaque turbomoteur comportant un générateur de gaz (4) et une turbine libre (7), durant la phase de régulation on met en oeuvre automatiquement le mode de fonctionnement au ralenti en fonction de conditions opérationnelles et hiérarchisées:
- soit au travers d'un premier mode de régulation en régulant une première vitesse de rotation (Ng) qui est la vitesse de rotation dudit générateur de gaz (4),
- soit au travers d'un deuxième mode de régulation en régulant une deuxième vitesse de rotation (NTL) qui est la vitesse de rotation de ladite turbine libre (7).

4. Procédé selon la revendication 3,
**caractérisé en ce que** lesdites conditions opérationnelles et hiérarchisées sont :
- la génération d'air chaud à partir du turbomoteur pour chauffer l'aéronef en fonction de conditions extérieures,
- la génération d'énergie électrique à partir du générateur de gaz pour alimenter électriquement l'aéronef,
- la minimisation d'émissions sonores,
- la minimisation de la consommation de carburant.

5. Procédé selon la revendication 4,
**caractérisé en ce qu'**on établit un ordre des priorités en fonction des besoins de l'opérateur de l'aéronef.

6. Procédé selon la revendication 3,
**caractérisé en ce que** durant la phase de régulation (STP1) :
- on détermine une première vitesse de rotation originelle (Ng1) à atteindre pour réguler la deuxième vitesse de rotation à un niveau (NTLcrit) défini par le constructeur,
- on détermine une énergie électrique cible (ITOT) que doit fournir ledit groupe de motorisation,
- si le groupe de motorisation ne peut pas fournir ladite énergie électrique cible lorsque chaque générateur de gaz (4) fonctionne à ladite première vitesse de rotation originelle (Ng1), on met en oeuvre le mode de fonctionnement au ralenti en régulant la première vitesse de rotation (Ng) dudit générateur de gaz (4).

7. Procédé (1) selon la revendication 6,
**caractérisé en ce que** ledit niveau (NTLcrit) est défini pour assurer un fonctionnement de l'aéronef (1) hors d'une plage de résonance sol.

8. Procédé (1) selon la revendication 6,
**caractérisé en ce que** si le groupe de motorisation (3) ne peut pas fournir ladite énergie électrique cible (ITOT) lorsque chaque générateur de gaz (4) fonctionne à ladite première vitesse de rotation originelle (Ng1) :
- on détermine une température d'air chaud de consigne (THOT) à fournir pour chauffer l'aéronef,
- on détermine une première vitesse de rotation de consigne (Ngcons) permettant de fournir ladite énergie électrique cible (ITOT),
- on détermine si la première vitesse de rotation de consigne (Ngcons) permet d'atteindre ladite température d'air chaud de consigne,
- si la première vitesse de rotation de consigne (Ngcons) permet d'atteindre ladite température d'air chaud de consigne, on contrôle le turbomoteur afin de maintenir la première vitesse de rotation égale à la première vitesse de rotation de consigne (Ngcons),
- si la première vitesse de rotation de consigne (Ngcons) ne permet pas d'atteindre ladite température d'air chaud de consigne (THOT), on contrôle le turbomoteur afin de maintenir la première vitesse de rotation (Ng) égale à une première vitesse de rotation cible permettant d'atteindre ladite température d'air chaud de consigne.

9. Procédé (1) selon la revendication 6,
**caractérisé en ce que** si le groupe de motorisation (3) peut fournir ladite énergie électrique cible lorsque chaque générateur de gaz (4) fonctionne à ladite première vitesse de rotation originelle (Ng1):
- on détermine une température d'air chaud de consigne (THOT) à fournir pour chauffer l'aéronef,
- si la première vitesse de rotation originelle (Ng1) permet d'atteindre ladite température d'air chaud de consigne (THOT), on contrôle le turbomoteur afin de maintenir la deuxième vitesse de rotation (NTL) égale audit niveau (NTLcrit),
- si la première vitesse de rotation originelle (Ng1) ne permet pas d'atteindre ladite température d'air chaud de consigne (THOT), on détermine la première vitesse de rotation de consigne (Ngcons) permettant d'atteindre ladite température d'air chaud de consigne (THOT), puis on contrôle le turbomoteur afin de maintenir la première vitesse de rotation (Ng) égale à la première vitesse de rotation de consigne (Ngcons).

10. Procédé (1) selon la revendication 3,
**caractérisé en ce qu'**on met en oeuvre un moyen d'inhibition (70) du premier mode de régulation.

11. Procédé (1) selon la revendication 1,
**caractérisé en ce qu'**on implémente une butée pour limiter un couple développé par un arbre de sortie dudit turbomoteur lorsque le turbomoteur fonctionne selon un mode de fonctionnement au ralenti.

12. Dispositif de régulation (10) d'un groupe de motorisation (3') d'aéronef (1) comprenant au moins un turbomoteur (3), cet aéronef (1) comportant au moins une voilure tournante (300) pourvue d'une pluralité de pales (301) à pas variable entraînées en rotation par ledit groupe de motorisation (3'), chaque turbomoteur (3) pouvant fonctionner selon un mode de fonctionnement au ralenti et selon un mode de fonctionnement de vol,
**caractérisé en ce que** le dispositif de régulation comporte :
- un système de détermination (50) d'un pas collectif desdites pales,
- un dispositif de détermination (55) d'un état de posé de l'aéronef sur un sol,
- un sélecteur (60) à deux positions (POS1, POS2), ledit sélecteur (60) ayant une première position (POS1) requérant l'arrêt de chaque turbomoteur (3) et une deuxième position (POS2) requérant le fonctionnement de chaque turbomoteur (3),
- un système de calcul (15) relié au système de détermination (50) du pas collectif ainsi qu'au dispositif de détermination (55) d'un état de posé et au sélecteur (60) pour commander chaque turbomoteur (3), ledit système de calcul (15) exécutant des instructions mémorisées pour automatiquement mettre en oeuvre le mode de fonctionnement au ralenti sur chaque turbomoteur (3) si un pas collectif (CLP) desdites pales (301) est inférieur à un seuil et si l'aéronef (1) repose sur un sol.

13. Dispositif selon la revendication 12,
**caractérisé en ce que** le système de calcul (15) comporte un calculateur avionique (30) relié au système de détermination (50) ainsi qu'au dispositif de détermination (55) et au sélecteur (60), ledit système de calcul (15) incluant un calculateur moteur (20) par turbomoteur (3) relié au calculateur avionique (30).

14. Dispositif selon la revendication 12,
**caractérisé en ce que**, ledit aéronef (1) comportant un réseau électrique (40) alimenté électriquement par le groupe de motorisation (3'), le dispositif de régulation (10) comprend un système de mesure (42) de l'énergie électrique consommé par ledit réseau électrique (40).

15. Dispositif selon la revendication 12,
**caractérisé en ce que** le dispositif de régulation (10) comprend un dispositif de mesure (65) des conditions environnementales extérieures à l'aéronef afin de déterminer une température d'air chaud de consigne pour chauffer l'aéronef (1).

16. Aéronef (1) muni d'un groupe de motorisation (3') comprenant au moins un turbomoteur (3), cet aéronef (1) comportant au moins une voilure tournante (300) pourvue d'une pluralité de pales (301) à pas variable entraînées en rotation par ledit groupe de motorisation (3'), chaque turbomoteur (3) pouvant fonctionner selon un mode de fonctionnement au ralenti et selon un mode de fonctionnement de vol,
**caractérisé en ce qu'**il comporte un dispositif de régulation (10) selon l'une quelconque des revendications 12 à 15.

## Patentansprüche

1. Automatisches Regelungsverfahren eines Antriebsaggregats (3') eines Luftfahrzeugs (1) mit mindestens einem Turbomotor (3), wobei dieses Luftfahrzeug (1) mindestens einen Drehflügel (300) aufweist, der mit einer Mehrzahl von Rotorblättern (301) mit variabler Blattwinkelverstellung versehen ist, die durch das Antriebsaggregat (3') zu einer Drehbewegung angetrieben werden, wobei jeder Turbomotor (3) in einem verlangsamten Betriebsmodus und in einem Flugbetriebsmodus arbeiten kann,
**dadurch gekennzeichnet, dass**:
- man während einer Auswahlphase (STP0) einen Zwei-Stellungs-Wahlschalter (60) betätigt, entweder um jeden Turbomotor (3) anzuhalten oder jeden Turbomotor (3) in Betrieb zu setzen, und
- während einer Regelungsphase (STP1) jeder Turbomotor (3) automatisch gesteuert wird, um den verlangsamten Betriebsmodus auszuführen, wenn eine kollektive Blattwinkelverstellung (CLP) der Rotorblätter kleiner als ein Schwellenwert ist und wenn das Luftfahrzeug (1) am Boden ruht.

2. Verfahren nach Anspruch 1,
**dadurch gekennzeichnet, dass** während einer Regelungsphase jeder Turbomotor automatisch gesteuert wird, um den verlangsamten Betriebsmodus auszuführen, wenn die kollektive Blattwinkelverstellung (CLP) kleiner als der Schwellenwert ist und wenn das Luftfahrzeug (1) seit einer Verzögerungszeitdauer am Boden ruht.

3. Verfahren nach Anspruch 1,
**dadurch gekennzeichnet, dass** jeder Turbomotor einen Gasgenerator (4) und eine Arbeitsturbine (7) aufweist, wobei während der Regelphase automatisch der verlangsamte Betriebsmodus in Abhängigkeit von Betriebsbedingungen und hierarchisierten Bedingungen in Betrieb gesetzt wird:
- entweder durch einen ersten Regelungsmodus, bei dem eine erste Drehgeschwindigkeit (Ng), die die Drehgeschwindigkeit des Gasgenerators (4) ist, geregelt wird,
- oder durch einen zweiten Regelungsmodus, bei dem eine zweite Drehgeschwindigkeit (NTL), die die Drehgeschwindigkeit der Arbeitsturbine (7) ist, geregelt wird.

4. Verfahren nach Anspruch 3,
**dadurch gekennzeichnet, dass** die hierarchisierten Betriebsbedingungen sind:
- die Erzeugung warmer Luft ausgehend von dem Turbomotor, um das Luftfahrzeug in Abhängigkeit von Außenbedingungen zu heizen,
- die Stromerzeugung mit dem Gasgenerator, um das Luftfahrzeug mit Elektrizität zu versorgen,
- die Minimierung der Schallemissionen,
- die Minimierung des Kraftstoffverbrauchs.

5. Verfahren nach Anspruch 4,
**dadurch gekennzeichnet, dass** eine Prioritätenreihenfolge in Abhängigkeit von Bedürfnissen der Bedienungsperson des Luftfahrzeugs erstellt wird.

6. Verfahren nach Anspruch 3,
**dadurch gekennzeichnet, dass** während der Regelphase (STP1):
- eine erste ursprüngliche Drehgeschwindigkeit (Ng1) bestimmt wird, die zu erreichen ist, um die zweite Drehgeschwindigkeit auf einer Höhe (NTLcrit) einzustellen, die von dem Konstrukteur definiert ist,
- ein Soll-Strom (ITOT), den das Antriebsaggregat liefern muss, bestimmt wird,
- falls das Antriebsaggregat den Soll-Strom nicht liefern kann, wenn jeder Gasgenerator (4) mit der ersten ursprünglichen Drehgeschwindigkeit (Ng1) arbeitet, der verlangsamte Betriebsmodus ausgeführt wird, indem die erste Drehgeschwindigkeit (Ng) des Gasgenerators (4) eingestellt wird.

7. Verfahren (1) nach Anspruch 6,
**dadurch gekennzeichnet, dass** die Höhe (NTLcrit) definiert ist, um einen Betrieb des Luftfahrzeugs (1) außerhalb eines Bodenresonanzbereichs sicherzustellen.

8. Verfahren (1) nach Anspruch 6,
**dadurch gekennzeichnet, dass**, wenn das Antriebsaggregat (3) den Soll-Strom (ITOT) nicht liefern kann, während jeder Gasgenerator (4) mit der ersten ursprünglichen Drehgeschwindigkeit (Ng1) arbeitet:
- eine Soll-Temperatur der heißen Luft, die zu liefern ist, um das Luftfahrzeug zu heizen, bestimmt wird,
- eine erste Soll-Drehgeschwindigkeit (Ngcons) bestimmt wird, die es erlaubt, den Soll-Strom (ITOT) zu liefern,
- bestimmt wird, ob die erste Soll-Drehgeschwindigkeit (Ngcons) es erlaubt, die Soll-Temperatur der heißen Luft zu erreichen,
- wenn die erste Soll-Drehgeschwindigkeit (Ngcons) es erlaubt, diese Soll-Temperatur der heißen Luft zu erreichen, der Turbomotor so gesteuert wird, dass er die erste Drehgeschwindigkeit hält, die gleich der ersten Soll-Drehgeschwindigkeit (Ngcons) ist,
- wenn es die erste Soll-Drehgeschwindigkeit (Ngcons) nicht erlaubt, die Soll-Temperatur der heißen Luft (THOT) zu erreichen, der Turbomotor so gesteuert wird, dass er die erste Drehgeschwindigkeit (Ng) beibehält, die gleich einer ersten Soll-Drehgeschwindigkeit ist, was es erlaubt, die Soll-Temperatur der heißen Luft zu erreichen.

9. Verfahren (1) nach Anspruch 6,
**dadurch gekennzeichnet, dass**, wenn das Antriebsaggregat (3) den Soll-Strom liefern kann, während jeder Gasgenerator (4) bei der ersten ursprünglichen Drehgeschwindigkeit (Ng1) arbeitet:
- eine Soll-Temperatur (THOT) der heißen Luft, die zu liefern ist, um das Luftfahrzeug zu heizen, bestimmt wird,
- wenn die erste ursprüngliche Drehgeschwindigkeit (Ng1) es erlaubt, die Soll-Temperatur der heißen Luft (THOT) zu erreichen, der Turbomotor so gesteuert wird, dass er die zweite Drehgeschwindigkeit (NTL) beibehält, die gleich dem Niveau (NTLcrit) ist,
- wenn die erste ursprüngliche Drehgeschwindigkeit (Ng1) es nicht erlaubt, die Soll-Temperatur (THOT) der heißen Luft zu erreichen, die erste Soll-Drehgeschwindigkeit (Ngcons) bestimmt wird, die es erlaubt, die Soll-Temperatur (THOT) der heißen Luft zu erreichen, und dann der Turbomotor so gesteuert wird, dass er die erste Drehgeschwindigkeit (Ng) beibehält, die gleich der ersten Soll-Drehgeschwindigkeit (Ngcons) ist.

10. Verfahren (1) nach Anspruch 3,
**dadurch gekennzeichnet, dass** ein Verhinderungsmittel (70) des ersten Regelmodus eingesetzt wird.

11. Verfahren (1) nach Anspruch 1,
**dadurch gekennzeichnet, dass** ein Anschlag implementiert wird zur Begrenzung eines Drehmoments, das von einer Ausgangswelle des Turbomotors erzeugt wird, wenn der Turbomotor in einem verlangsamten Betriebsmodus arbeitet.

12. Vorrichtung (10) zum Regeln eines Antriebsaggregats (3') eines Luftfahrzeugs (1) mit mindestens einem Turbomotor (3), wobei das Luftfahrzeug (1) mindestens einen Drehflügel (300) mit einer Mehrzahl von Rotorblättern (301) mit variabler Blattwinkelverstellung aufweist, wobei die Rotorblätter durch das Antriebsaggregat (3') zu einer Drehbewegung angetrieben werden, wobei jeder Turbomotor (3) in einem verlangsamten Betriebsmodus und in einem Flugbetriebsmodus arbeiten kann,
**dadurch gekennzeichnet, dass** die Regelungsvorrichtung aufweist:
- ein System (50) zum Bestimmen einer kollektiven Blattwinkelverstellung der Rotorblätter,
- eine Vorrichtung (55) zum Bestimmen eines Zustands, in dem das Luftfahrzeug am Boden ruht,
- einen Wahlschalter (60) mit zwei Stellungen (POS 1, POS2), wobei der Wahlschalter (60) eine erste Stellung (POS1) aufweist, die das Anhalten eines jeden Turbomotors (3) fordert, und eine zweite Stellung (POS2), die den Betrieb eines jeden Turbomotors (3) fordert,
- ein Berechnungssystem (15), das mit dem System (50) zur Bestimmung der kollektiven Blattwinkelverstellung sowie mit der Vorrichtung (55) zur Bestimmung eines Zustands des Ruhens am Boden und mit dem Wahlschalter (60) zum Steuern eines jeden Turbomotors (3) verbunden ist, wobei das Berechnungssystem (15) gespeicherte Befehle ausführt, um automatisch den verlangsamten Betriebsmodus für jeden Turbomotor (3) auszuführen, wenn eine kollektive Blattwinkelverstellung (CLP) der Rotorblätter (301) kleiner ist als ein Schwellenwert und wenn das Luftfahrzeug (1) am Boden ruht.

13. Vorrichtung nach Anspruch 12,
**dadurch gekennzeichnet, dass** das Berechnungssystem (15) einen Flugmanagementrechner (30) aufweist, der mit dem Bestimmungssystem (50) sowie mit dem Bestimmungssystem (55) und dem Wahlschalter (60) verbunden ist, wobei das Berechnungssystem (15) einen Motorrechner (20) pro Turbomotor (3) aufweist, der mit dem Flugmanagementrechner (30) verbunden ist.

14. Vorrichtung nach Anspruch 12,
**dadurch gekennzeichnet, dass** das Luftfahrzeug (1) ein elektrisches Netzwerk (40) aufweist, das durch das Antriebsaggregat (3') elektrisch gespeist wird, wobei die Regelungsvorrichtung (10) ein System (42) zur Messung der elektrischen Energie, die von dem elektrischen Netzwerk (40) verbraucht wird, aufweist.

15. Vorrichtung nach Anspruch 12,
**dadurch gekennzeichnet, dass** die Regelungsvorrichtung (10) eine Vorrichtung (65) zur Messung von Umweltbedingungen außerhalb des Luftfahrzeugs aufweist, um eine Soll-Temperatur der heißen Luft zum Heizen des Luftfahrzeugs (1) zu bestimmen.

16. Luftfahrzeug (1) mit einem Antriebsaggregat (3') mit mindestens einem Turbomotor (3), wobei das Luftfahrzeug (1) mindestens einen Drehflügel (300) mit einer Mehrzahl von Rotorblättern (301) mit variabler Blattwinkelverstellung, die durch das Antriebsaggregat (3') zu einer Drehbewegung angetrieben werden, aufweist, wobei jeder Turbomotor (3) in einem verlangsamten Betriebsmodus und in einem Flugbetriebsmodus arbeiten kann,
**dadurch gekennzeichnet, dass** es eine Regelungsvorrichtung (10) nach einem der Ansprüche 12 bis 15 aufweist.

## Claims

1. Automatic method for regulating a power plant (3') of an aircraft (1) comprising at least one turbine engine (3), said aircraft (1) having at least one rotary wing (300) provided with a plurality of blades (301) having variable pitch driven in rotation by said power plant (3'), each turbine engine (3) being able to operate in an idling mode of operation and in a flight mode of operation,
**characterized in that**:
- during a selection phase (STP0), a two-position selector (60) is operated either to stop each turbine engine (3) or to set each turbine engine (3) into operation, and
- during a regulation phase (STP1), each turbine engine (3) is controlled automatically so as to implement the idling mode of operation if a collective pitch (CLP) of said blades is less than a threshold and if the aircraft (1) is resting on a ground.

2. Method according to claim 1,
**characterized in that** during a regulation phase, each turbine engine is controlled automatically so as to implement the idling mode of operation if said collective pitch (CLP) is less than said threshold and if the aircraft (1) has been resting on a ground for a delay time.

3. Method according to claim 1,
**characterized in that** each turbine engine comprising a gas generator (4) and a free turbine (7), during the regulation
phase the idling mode of operation is implemented automatically according to operational and hierarchically ordered conditions:
- either through a first mode of regulation by regulating a first speed of rotation (Ng) which is the speed of rotation of said gas generator (4),
- or through a second mode of regulation by regulating a second speed of rotation (NTL) which is the speed cf rotation of said free turbine (7).

4. Method according to claim 3,
**characterized in that** said operational and hierarchically ordered conditions are:
- the generation of hot air from the turbine engine for heating the aircraft according to outside conditions,
- the generation of electrical energy from the gas generator for electrically powering the aircraft,
- the minimization of noise emissions,
- the minimization of fuel consumption.

5. Method according to claim 4,
**characterized in that** an order of priorities is established according to the needs of the operator of the aircraft.

6. Method according to claim 3,
**characterized in that** during the regulation phase (STP1):
- an original first speed of rotation (Ng1) is determined which is to be reached for regulating the second speed of rotation at a level (NTLcrit) defined by the manufacturer,
- a target electrical energy (ITOT) is determined which said power plant is to deliver,
- if the power plant cannot deliver said target electrical energy when each gas generator (4) is operating at said first original speed of rotation (Ng1), the idling mode of operation is implemented by regulating the first speed of rotation (Ng) of said gas generator (4).

7. Method (1) according to claim 6,
**characterized in that** said level (NTLcrit) is defined to ensure that the aircraft (1) operates outside a ground resonance range.

8. Method according to claim 6,
**characterized in that** if the power plant (3) cannot deliver said target electrical energy (ITOT) when each gas generator is operating at said original first speed of rotation (Ng1):
- a setpoint hot air temperature (THOT) is determined which is to be delivered for heating the aircraft,
- a first setpoint speed of rotation (Ngcons) is determined which makes it possible to deliver said target electrical energy (TOT),
- it is determined whether the first setpoint speed of rotation (Ngcons) makes it possible to reach said setpoint hot air temperature,
- if the first setpoint speed of rotation (Ngcons) makes it possible to reach said setpoint hot air temperature, the turbine engine is controlled in order to maintain the first speed of rotation equal to the first setpoint speed of rotation (Ngcons),
- if the first setpoint speed of rotation (Ngcons) does not make it possible to reach said setpoint hot air temperature (THOT), the turbine engine is controlled in order to maintain the first speed of rotation (Ng) equal to a first target speed of rotation making it possible to reach said setpoint hot air temperature.

9. Method (1) according to claim 6,
**characterized in that** if the power plant (3) can deliver said target electrical energy when each gas generator (4) is operating at said original first speed of rotation (Ng1):
- a setpoint hot air temperature (THOT) is determined which is to be delivered for heating the aircraft,
- if the original first speed of rotation (Ng1) makes it possible to reach said setpoint hot air temperature (THOT), the turbine engine is controlled in order to maintain the second speed of rotation (NTL) equal to said level (NTLcrit),
- if the original first speed of rotation (Ng1) does not make it possible to reach said setpoint hot air temperature (THOT), the first setpoint speed of rotation (Ngcons) making it possible to reach said setpoint hot air temperature (THOT) is determined, and then the turbine engine is controlled in order to maintain the first speed of rotation (Ng) equal to the first setpoint speed of rotation (Ngcons).

10. Method (1) according to claim 3,
**characterized in that** inhibiting means (70) are implemented for inhibiting the first mode of regulation.

11. Method (1) according to claim 1,
**characterized in that** a stop is implemented for limiting a torque developed by an output shaft of said turbine engine when the turbine engine is operating in an idling mode of operation.

12. Regulation device (10) for regulating a power plant (3') of an aircraft (1) comprising at least one turbine engine (3), said aircraft (1) having at least one rotary wing (300) provided with a plurality of blades (301) having variable pitch driven in rotation by said power plant (3'), each turbine engine (3) being able to operate in an idling mode of operation and in a flight mode of operation,
**characterized in that** said regulation device comprises:
- a determination system (50) for determining a collective pitch of said blades,
- a determination device (55) for determining a state in which the aircraft is resting on a ground,
- a selector (60) having two positions (POS1, POS2), said selector (60) having a first position (POS1) requiring each turbine engine (3) to stop and a second position (POS2) requiring each engine (3) to operate,
- a computation system (15) connected to the determination system (50) for determining the collective pitch and to the determination device (55) for determining an aircraft standing state and to the selector (60) for controlling each turbine engine (3), said computation system (15) executing stored instructions for automatically implementing the idling mode of operation in each turbine engine (3) if a collective pitch (CLP) of said blades (301) is less than a threshold and if the aircraft (1) is resting on a ground.

13. Device according to claim 12,
**characterized in that** the computation system (15) comprises an avionics computer (30) connected to the determination system (50) as well as to the determination device (55) and to the selector (60), said computation system (15) including one engine computer (20) per turbine engine (3) connected to the avionics computer (30).

14. Device according to claim 12,
**characterized in that**, said aircraft (1) comprising an electrical network (40) electrically powered by the power plant (3'), the regulation device (10) comprises a measurement system (42) for measuring the electrical energy consumed by said electrical network (40).

15. Device according to claim 12,
**characterized in that** the regulation device (10) comprises a measurement device (65) for measuring the environmental conditions outside the aircraft in order to determine a setpoint hot air temperature for heating the aircraft (1).

16. Aircraft (1) provided with a power plant (3') comprising at least one turbine engine (3), said aircraft (1) having at least one rotary wing (300) provided with a plurality of blades (301) having variable pitch driven in rotation by said power plant (3'), each turbine engine (3) being able to operate in an idling mode of operation and in a flight mode of operation,
**characterized in that** it comprises a regulation device (10) according to any one of claims 12 to 15.
